# FASCICULE DE BREVET EUROPEEN

(11) **EP 1 805 000 B1**
(45) Date de publication et mention de la délivrance du brevet: **19.12.2007**
(21) Numéro de dépôt: 05812328.2
(22) Date de dépôt: 20.10.2005
(51) Int. Cl.: B29C 49/68, B29C 49/06

(54) **DISPOSITIF DE CHAUFFAGE D'EBAUCHES EN MATIERE THERMOPLASTIQUE**
VORRICHTUNG ZUM ERWÄRMEN VON THERMOPLASTISCHEN ROHLINGEN
DEVICE FOR HEATING THERMOPLASTIC BLANKS

(30) Priorité: 22.10.2004 FR 0411300
(43) Date de publication de la demande: 11.07.2007
(73) Titulaire: SIDEL PARTICIPATIONS, 76930 Octeville-sur-Mer (FR)
(72) Inventeur: EVRARD, Alain, c/o Sidel, F-76930 Octeville sur Mer (FR)
(74) Mandataire: Cabinet Plasseraud
(86) Numéro de dépôt international: PCT/FR2005/002611
(87) Numéro de publication internationale: WO 2006/045926

(56) Documents cités:
- DE-A1- 1 816 489
- DE-A1- 10 058 950
- US-A- 5 980 229
- US-B1- 6 632 087

## Description

La présente invention concerne d'une façon générale le domaine de la fabrication de récipients, tels que des bouteilles, en matière thermoplastique à partir d'ébauches chauffées par un processus de soufflage ou d'étirage-soufflage, et elle concerne plus spécifiquement des perfectionnements apportés dans le domaine du chauffage d'au moins une ébauche destinée à la fabrication d'un récipient, tel qu'une bouteille, en matière thermoplastique, notamment en PET, par soufflage ou étirage-soufflage, l'ébauche étant disposée entre deux parois latérales face à face et distantes l'une de l'autre et l'une de celles-ci supportant plusieurs sources de rayonnement disposées les unes au-dessus des autres en regard du corps de l'ébauche.

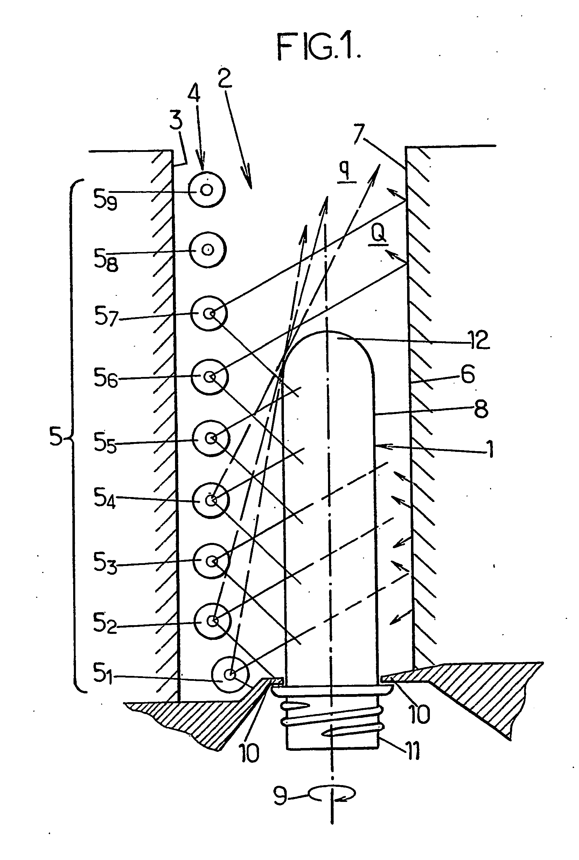

En pratique, comme illustrée dans les documents DE 100 58 950 A1 et US-B1-6 632 087, et aussi schématiquement à la figure 1 des dessins annexés, l'ébauche 1 (en général une préforme de récipient, comme illustré sur cette figure, ou un récipient intermédiaire dans les processus à soufflages multiples successifs) est chauffée au défilé, en étant entraînée en rotation sur elle-même (flèche 9), tout en étant disposée le plus souvent avec son col 11 situé en bas, dans un four 2 en forme de couloir dont une paroi latérale 3 est pourvue d'une succession d'ensembles 4 de sources 5 de rayonnements (en général une succession de lampes superposées tubulaires à rayonnement infrarouge court qui est absorbé par le matériau thermoplastique et qui chauffe celui-ci à coeur) et dont la paroi latérale 6 opposée peut avantageusement être pourvue de moyens réflecteurs 7. Le bas du four est doté de moyens de protection 10 agencés pour former un écran thermique apte à protéger le col 11 de l'ébauche 1 et à empêcher sa déformation. Chaque ensemble 4 de sources 5 de rayonnement comporte un nombre de sources en rapport avec la hauteur du corps 8 de la plus grande ébauche 1 susceptible d'être traitée dans le four. Pour chauffer des ébauches plus petites, seul le nombre approprié de sources 5 de chaque ensemble 4 en relation avec la hauteur du corps 8 de l'ébauche 1 est mis en service (dans l'exemple de la figure 1, les deux sources supérieures 5₉ et 5₈ ne sont pas en service).

Chaque source 5 de rayonnement émet dans un cône largement ouvert, de sorte qu'au moins une partie sensible Q du rayonnement émis par la source supérieure en service 5₇, voire plusieurs sources supérieures 5₇ et 5₆, ainsi qu'une partie moindre q du rayonnement émis par les autres sources 5₅ à 5₁ situées plus bas passent au-dessus du fond de l'ébauche 1 et sont perdues.

Les fabricants de récipients en matière thermoplastique cherchent actuellement à réduire dans toute la mesure du possible les charges inhérentes au fonctionnement des machines de fabrication de ces récipients, et notamment la consommation d'énergie électrique de ces machines.

Or, le four de chauffage des ébauches contribue majoritairement (de l'ordre de 70 à 90%) dans la consommation d'énergie électrique d'une installation de fabrication de récipients en matière thermoplastique.

Par conséquent, toute réduction, aussi faible soit-elle, de pertes dans le four se traduit par une réduction concomitante sensible de la consommation d'énergie électrique, et donc par une économie financière et une meilleure rentabilité de la machine.

L'invention a donc essentiellement pour but de répondre à cette attente des utilisateurs et de proposer des moyens propres à réduire sensiblement les pertes dans le four de chauffage des ébauches, et la consommation en énergie électrique de celui-ci.

A ces fins, l'invention propose un dispositif de chauffage d'au moins une ébauche destinée à la fabrication d'un récipient, tel qu'une bouteille, en matière thermoplastique, notamment en PET, par soufflage ou étirage-soufflage, selon la revendication 1.

Grâce à ces dispositions, on limite les pertes dues aux rayonnements perdus. Pour fixer les idées, il est possible de parvenir, par mise en oeuvre des dispositions conformes à l'invention, à une réduction de la consommation en énergie électrique du four de l'ordre de 10% en même temps qu'on améliore le niveau de chauffage de l'ébauche de l'ordre de 3%.

Toutefois, pour éviter un emballement du dispositif de chauffage et une surchauffe de l'ébauche, il est souhaitable de laisser place à une ventilation ; pour ce faire, on prévoit de fermer environ les trois-quarts de l'intervalle entre les deux parois latérales.

Il apparaît par ailleurs préférable de disposer l'ébauche col en bas, puisque, dans cette disposition, la fermeture partielle étant effectuée en partie haute, il en résulte une atténuation des pertes par convection.

En pratique, on chauffe une multiplicité d'ébauches au défilé dans un four allongé en forme de couloir, les ébauches étant déplacées par des moyens de transport entre les deux parois et parallèlement à celles-ci. On peut alors prévoir qu'on ferme l'intervalle entre les deux parois seulement sur certains tronçons sélectionnés de manière que les ébauches déplacées subissent un profil de chauffe prédéterminé, cette disposition pouvant avantageusement se combiner avec d'autres solutions classiques telles le défaut ponctuel de chauffage sélectivement en certains emplacements verticaux et/ou longitudinaux.

Pour que le dispositif de chauffage puisse être exploité de la façon la plus souple possible et soit en mesure de traiter des ébauches de tailles très diverses, la plaque transversale est montée de façon amovible. La plaque transversale est agencée avec des moyens de fixation identiques aux moyens de fixation de chaque source de rayonnement dans son support respectif, de sorte que ladite plaque transversale est alors apte à être montée en lieu et place d'une source de rayonnement dans le support de celle-ci : la plaque transversale peut ainsi être positionnée au voisinage du fond de l'ébauche quelle que soit la hauteur de l'ébauche. Dans ce contexte, un mode de réalisation préféré consiste, les sources de rayonnement étant de forme générale tubulaire, en ce que la plaque transversale soit de forme allongée et possède la même longueur qu'une source de rayonnement. Notamment, dans un exemple concret de réalisation, on prévoit que les moyens de fixation de la plaque transversale soient des doigts saillants longitudinaux de même conformation que les douilles de contact des sources de rayonnement et propres à être engagés dans les organes récepteurs des douilles de contact des sources de rayonnement.

Pour éviter une surchauffe de l'ébauche, il est souhaitable que la plaque transversale possède une largeur correspondant à environ trois-quarts de l'espacement des deux parois latérales, de manière à laisser un espace suffisant pour une ventilation.

Les dispositions de l'invention peuvent avantageusement trouver une application dans les dispositifs de chauffage conformés en couloir allongé et comportant des moyens de transport pour déplacer l'ébauche entre les deux parois et parallèlement à celles-ci. On peut alors envisager de disposer des plaques transversales en certains emplacements entre les deux parois sélectionnées de manière que l'ébauche déplacée entre les parois soit soumise à un profil de chauffe prédéterminé.

Dans un exemple concret de réalisation, la face inférieure de la plaque transversale est revêtue d'une couche d'un matériau céramique réfléchissant pour la longueur d'onde du rayonnement, la plaque transversale pouvant avantageusement être constituée en aluminium.

L'invention sera mieux comprise à la lecture de la description détaillée qui suit de certains modes de réalisation préférés donnés uniquement à titre d'exemples nullement limitatifs. Dans cette description, on se réfère aux dessins annexés dans lesquels :
- la figure 1 est une représentation très schématique d'un dispositif de chauffage de l'art antérieur illustrant ses inconvénients ;
- la figure 2 est une représentation, analogue à celle de la figure 1, d'un dispositif de chauffage agencé conformément à l'invention en illustrant les avantages ;
- la figure 3 est une représentation du four de la figure 2 configuré différemment en relation avec une ébauche plus courte ;
- la figure 4 est une vue de dessus d'un mode de réalisation préféré d'une plaque transversale conforme à l'invention pour l'équipement du dispositif de chauffage des figures 2 et 3 ;
- la figure 5A est une vue partielle illustrant, à échelle agrandie, le mode de fixation d'une extrémité d'une lampe de chauffage du dispositif de chauffage ; et
- la figure 5B est une vue partielle illustrant, à échelle agrandie, le mode de montage, calqué sur celui de la figure 5A, d'un exemple préféré de réalisation de la plaque transversale de la figure 4.

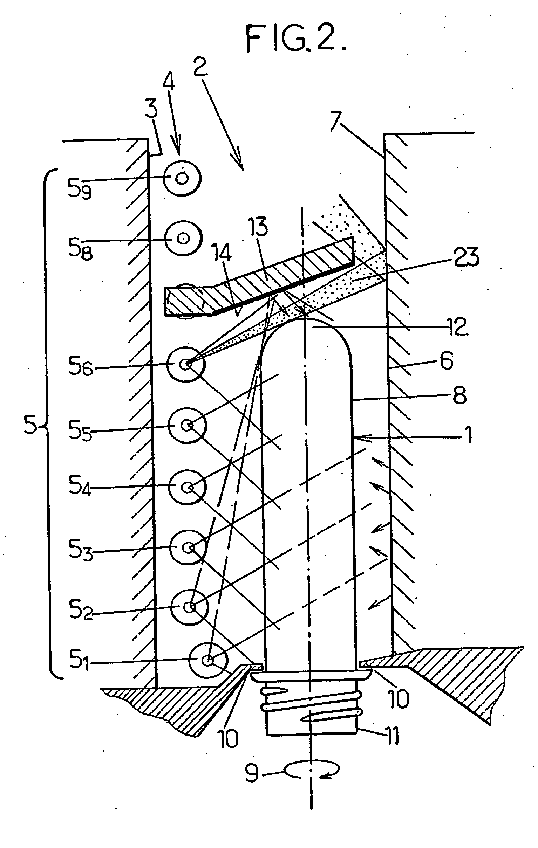

La figure 2 montre le four 2 de la figure 1, avec à l'intérieur une ébauche 1, en l'occurrence une préforme identique à celle de la figure 1 disposée ici avec son col 11 en bas (sur la figure 2, les mêmes références numériques qu'à la figure 1 sont conservées pour désigner les mêmes éléments). Dans le four 2, qui est ici agencé conformément à l'invention, l'intervalle entre les deux parois 3 et 6 latérales est fermé au moins en partie, au-delà du fond 12 de l'ébauche 1 et au voisinage dudit fond 12, ici au-dessus du fond 12, le col 11 de l'ébauche étant disposé en bas, de manière qu'au moins une partie du rayonnement émis au-delà du fond de l'ébauche soit réfléchi en direction du corps de l'ébauche, ce grâce à quoi on limite les pertes dues aux rayonnements perdus. En outre, avec la disposition représentée, l'ébauche étant disposée col 11 en bas et fond 12 en haut, on limite les pertes par convection. Avantageusement, on ferme environ les trois-quarts de l'intervalle entre les deux parois 3, 6 latérales de manière à laisser un passage pour une ventilation empêchant une surchauffe dans le four.

A cet effet, selon l'invention, au-delà du fond 12 de l'ébauche 1 et au voisinage de celui-ci est disposée au moins une plaque 13 transversale s'étendant au moins en partie entre les deux susdites parois 3, 6 latérales, la face 14 de cette plaque transversale qui est située en regard du fond 12 de l'ébauche 1 (ici la face inférieure avec la disposition de l'ébauche col 11 en bas) étant réfléchissante pour le rayonnement émis par lesdites sources 5.

De façon pratique, la plaque 13 transversale est montée de façon amovible sur l'une 3 des parois latérales du four en ayant recours à des moyens qui seront précisés plus loin. De cette manière, la même plaque 13 peut être montée sélectivement à l'emplacement approprié à l'intérieur du four de manière qu'elle ne soit pas positionnée trop loin de l'ébauche pour que l'effet souhaité puisse être obtenu dans des conditions optimales.

Comme représenté à la figure 2, les sources 5₁ à 5₆ sont fonctionnelles. La plus grande partie du rayonnement qui aurait été perdu dans l'agencement classique de la figure 1 est, ici, intercepté par la plaque 13 et réfléchi en direction de l'ébauche 1 soit directement, soit indirectement avec réflexion intermédiaire sur les moyens réflecteurs 7 de la paroi 6 latérale. Seul un étroit pinceau de rayonnement 23 (montré en grisé à la figure 2) n'est pas intercepté.

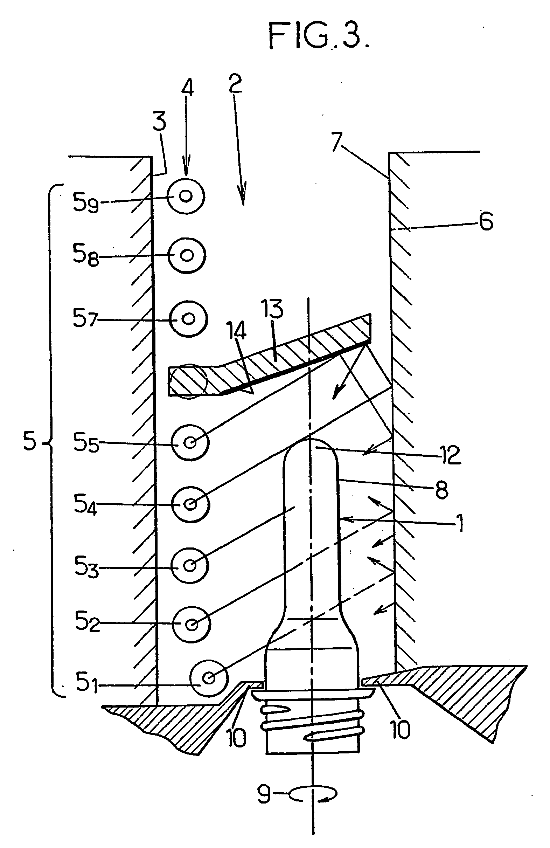

A la figure 3, dans le même four 2 se trouve une ébauche 1 de hauteur sensiblement moindre que celle de la figure 2. Aussi, pour un fonctionnement optimal de l'agencement conforme à l'invention, la plaque 13 est montée plus bas dans le four et seules les sources 5₁ à 5₅ sont alors fonctionnelles.

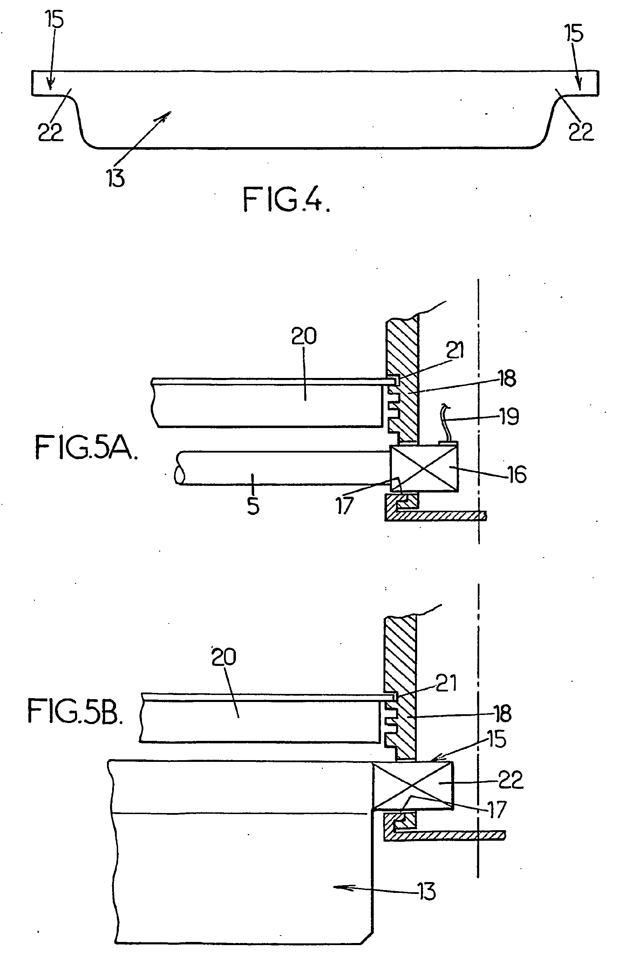

Comme visible à la figure 4, la plaque 13 se présente sous une forme générale rectangulaire et est conformée pour s'étendre transversalement, entre les deux parois 3, 6 latérales du four, sur environ les trois-quarts de l'intervalle, la plaque étant inclinée comme visible sur les figures 2 et 3. L'angle d'inclinaison est choisi de manière que la face 14 réfléchissante renvoie les rayonnements vers l'ébauche 1 ou la paroi 6. L'angle peut être choisi entre 10 et 30°.

Pour faciliter le montage de la plaque 13 à la hauteur requise en relation avec la hauteur de l'ébauche à traiter, une solution structurellement très simple consiste en ce que la plaque 13 transversale soit agencée avec des moyens de fixation 15 identiques aux moyens de fixation de chaque source 5 de rayonnement dans son support respectif, de sorte que ladite plaque transversale soit apte à être montée en lieu et place d'une source de rayonnement dans le support de celle-ci.

En pratique, les sources de rayonnement sont des lampes allongées de forme générale tubulaire ; la plaque 13 transversale est alors de forme rectangulaire allongée comme visible à la figure 4 et possède la même longueur qu'une source de rayonnement.

A la figure 5A est montré un agencement courant, dans les dispositifs de chauffage de la Demanderesse, de montage d'une extrémité d'une source 5 de rayonnement. A son extrémité, la source 5 est munie d'une douille 16 de contact, typiquement de section carrée, qui est engagée dans une ouverture 17 de forme complémentaire prévue dans une cloison 18 transversale de support appartenant à la structure du four 2, la cloison 18 et l'ouverture 17 formant organe de support de la douille. Un fil 19 d'alimentation électrique est solidarisé (notamment soudé) sur la douille 16. En arrière de la source 5 est située une paroi 20 d'isolation thermique protégeant le reste de la structure, ladite paroi 20 étant retenue dans une rainure 21 de la cloison 18 transversale.

Dans ces conditions, comme montré à la figure 5B, les moyens de fixation 15 de la plaque 13 transversale sont des doigts 22 saillants longitudinaux de même conformation que les douilles 16 de contact des sources de rayonnement - autrement dit de forme carrée dans l'exemple considéré - et propres à être engagés dans les ouvertures 17 de réception des douilles de contact des sources de rayonnement.

Dans les installations de fabrication de récipients en continu et à cadence élevée telles que celles couramment commercialisées par la Demanderesse, le four 2 se présente sous la forme générale d'un couloir allongé et comporte des moyens de transport pour déplacer les ébauches 1 les unes à la suite des autres entre les deux parois 3, 6 et parallèlement à celles-ci tout en faisant tourner les ébauches 1 sur elles-mêmes (flèche 9). Il est courant, dans une telle configuration de four, de moduler le chauffage des ébauches pour obtenir un profil de chauffe adapté à la déformation imposée ensuite lors du soufflage ; une modulation consiste fréquemment à laisser certaines sources, voire certains ensembles de sources, inactivés, ou de préférence à réguler la puissance individuelle des sources.

Dans ce contexte, on peut envisager de réaliser une telle modulation du chauffage en prévoyant que des plaques 13 transversales soient disposées en certains emplacements sélectionnés entre les deux parois de manière que l'ébauche déplacée entre les parois soit soumise à un profil de chauffe prédéterminé. Autrement dit, on prévoit de disposer des plaques 13 en certains emplacements, mais non en d'autres emplacements.

De façon avantageuse, on prévoit que la face inférieure 14 de la plaque 13 transversale est revêtue d'une couche d'un matériau céramique qui est réfléchissant pour la longueur d'onde du rayonnement, en pratique un rayonnement infrarouge court.

De façon simple et peu coûteuse, la plaque 13 transversale est constituée en aluminium.

## Revendications

1. Dispositif de chauffage d'au moins une ébauche (1) destinée à la fabrication d'un récipient, tel qu'une bouteille, en matière thermoplastique, notamment en PET, par soufflage ou étirage-soufflage, ledit dispositif de chauffage comportant deux parois (3, 6) latérales face à face et distantes l'une de l'autre entre lesquelles est disposée l'ébauche (1), l'une (3) desdites parois latérales supportant plusieurs sources (5) de rayonnement disposées les unes au-dessus des autres en regard du corps (8) de l'ébauche, au moins une plaque (13) transversale étant disposée au-delà du fond (12) de l'ébauche et au voisinage de celui-ci et s'étendant au moins en partie entre les deux susdites parois (3, 6) latérales, la face (14) inférieure de cette plaque (13) transversale qui est située en regard du fond (12) de l'ébauche (1) étant réfléchissante pour le rayonnement émis par lesdites sources (5) et étant inclinée,
**caractérisé**
**en ce que** la plaque (13) est supportée par celle (3) des parois latérales qui supporte les sources (5) de rayonnement,
**en ce que** ladite face (14) inférieure de la plaque (13) est inclinée d'un angle tel que les rayonnements soient réfléchis vers l'ébauche (1) ou vers ladite paroi (6) latérale opposée à la paroi (3) latérale supportant les sources (5) de rayonnement, et
**en ce que** la plaque (13) transversale est agencée avec des moyens de fixation (15) identiques aux moyens de fixation de chaque source (5) de rayonnement dans son organe (17, 18) de support respectif, de sorte que ladite plaque transversale est apte à être montée en lieu et place d'une source de rayonnement dans le support de celle-ci.

2. Dispositif de chauffage selon la revendication 1, **caractérisé en ce que** l'angle d'inclinaison de la face (14) inférieure de la plaque (13) est compris entre 10° et 30°.

3. Dispositif de chauffage selon la revendication 1 ou 2, **caractérisé en ce que** l'ébauche est disposée col (11) en bas et fond (12) en haut, de sorte que les pertes dues à la convection sont limitées.

4. Dispositif de chauffage selon l'une quelconque des revendications 1 à 3, **caractérisé en ce que** la plaque (13) transversale est montée de façon amovible.

5. Dispositif selon l'une quelconque des revendications 1 à 4, **caractérisé en ce que** les sources (5) de rayonnement sont de forme générale tubulaire et **en ce que** la plaque (13) transversale est de forme allongée et possède la même longueur qu'une source (5) de rayonnement.

6. Dispositif selon l'une quelconque des revendications 1 à 5, **caractérisé en ce que** les moyens de fixation (15) de la plaque (13) transversale sont des doigts (22) saillants longitudinaux de même conformation que les douilles (16) de contact des sources (5) de rayonnement et propres à être engagés dans les organes (17, 18) de support des douilles de contact des sources de rayonnement.

7. Dispositif selon l'une quelconque des revendications 1 à 6, **caractérisé en ce que** la plaque (13) transversale possède une largeur correspondant à environ trois-quarts de l'espacement des deux parois (3, 6) latérales.

8. Dispositif selon l'une quelconque des revendications 1 à 7, ce dispositif de chauffage étant allongé et comportant des moyens de transport pour déplacer l'ébauche entre les deux parois et parallèlement à celles-ci, **caractérisé en ce que** des plaques (13) transversales sont disposées en certains emplacements sélectionnés entre les deux parois de manière que l'ébauche (1) déplacée entre les parois soit soumise à un profil de chauffe prédéterminé.

9. Dispositif selon l'une quelconque des revendications 1 à 8, **caractérisé en ce que** la face (14) de la plaque (13) transversale en regard du fond (12) de l'ébauche (1) est revêtue d'une couche d'un matériau céramique réfléchissant pour la longueur d'onde du rayonnement.

10. Dispositif selon l'une quelconque des revendications 1 à 9, **caractérisé en ce que** la plaque (13) transversale est constituée en aluminium.

## Claims

1. A device for heating at least one parison (1) intended for the manufacture of a container, such as a bottle, made of a thermoplastic, especially PET, by blow molding or stretch-blow molding, said heating device comprising two lateral walls (3, 6) facing each other and spaced apart from one another, between which a parison (1) is placed, one (3) of said lateral walls supporting several radiation sources (5) placed one above another facing the body (8) of the parison, at least one transverse plate (13) being placed beyond the bottom (12) of the parison and in the vicinity thereof and extending at least partly between said two lateral walls (3, 6), the lower face (14) of this transverse plate (13) that lies facing the bottom (12) of the parison (1) being reflective for the radiation emitted by said sources (5) and being inclined,
**characterized**
**in that** the plate (13) is supported by the one (3) of the lateral walls that supports the radiation sources (5),
**in that** said lower face (14) of the plate (13) is inclined at an angle such that the radiation is reflected toward the parison (1) or toward said lateral wall (6) opposite the lateral wall (3) supporting the radiation sources (5), and
**in that** the transverse plate (13) is arranged with fastening means (15) identical to the fastening means for fastening each radiation source (5) in its respective support member (17, 18), so that said transverse plate is adapted for being fitted instead of a radiation source in the support therefor.

2. The heating device as claimed in claim 1, **characterized in that** the angle of inclination of the lower face (14) of the plate (13) is between 10° and 30°.

3. The heating device as claimed in claim 1 or 2, **characterized in that** the parison is placed with its neck (11) down and its bottom (12) up, so that the losses due to convection are limited.

4. The heating device as claimed in any one of claims 1 to 3, **characterized in that** the transverse plate (13) is removably mounted.

5. The device as claimed in any one of claims 1 to 4, **characterized in that** the radiation sources (5) have a tubular general shape and **in that** the transverse plate (13) has an elongate shape and has the same length as a radiation source (5).

6. The device as claimed in any one of claims 1 to 5, **characterized in that** the fastening means (15) for fastening the transverse plate (13) are longitudinal projecting fingers (22) having the same conformation as the contact sockets (16) for the radiation sources (5) and suitable for being engaged in the members (17, 18) for supporting the contact sockets of the radiation sources.

7. The device as claimed in any one of claims 1 to 6, **characterized in that** the transverse plate (13) has a width corresponding to about three-quarters of the space between the two lateral walls (3, 6).

8. The device as claimed in any one of claims 1 to 7, this heating device being elongate and including transport means for moving the parison between the two walls and parallel to them, **characterized in that** transverse plates (13) are placed at certain selected locations between the two walls so that the parison (1) moved between the walls is subjected to a predetermined heating profile.

9. The device as claimed in any one of claims 1 to 8, **characterized in that** the face (14) of the transverse plate (13) facing the bottom (12) of the parison (1) is coated with a layer of a ceramic that is reflective for the wavelength of the radiation.

10. The device as claimed in any one of claims 1 to 9, **characterized in that** the transverse plate (13) is made of aluminum.

## Patentansprüche

1. Vorrichtung zur Erhitzung mindestens eines Rohlings (1), der für die Herstellung eines Behälters, wie beispielsweise einer Flasche, aus Thermoplast, insbesondere PET, durch Blasen oder Ziehen-Blasen bestimmt ist, wobei die Erhitzungsvorrichtung zwei gegenüber liegende Seitenwände (3, 6) umfasst, die in einem Abstand zueinander vorgesehen sind, zwischen den der Rohling (1) angeordnet wird, wobei eine (3) der Seitenwände mehrer Strahlungsquellen (5) trägt, die übereinander gegenüber dem Körper (8) des Rohlings angeordnet sind, wobei mindestens eine Querplatte (13) über den Boden (12) des Rohlings hinaus und in der Nähe desselben angeordnet ist und sich zumindest teilweise zwischen den beiden oben erwähnten Seitenwänden (3, 6) erstreckt, wobei die Unterseite (14) dieser Querplatte (13), die sich gegenüber dem Boden (12) des Rohlings (1) befindet, für die von den Quellen (5) entsandte Strahlung reflektierend und geneigt ist,
**dadurch gekennzeichnet, dass**
die Platte (13) von jener (3) der Querwände getragen wird, die die Strahlungsquellen (5) tragen,
die Unterseite (14) der Platte (13) um einen derartigen Winkel geneigt ist, dass die Strahlen zum Rohling (1) oder zu der Seitenwand (6) reflektiert werden, die der Seitenwand (3) gegenüber liegt, die die Strahlungsquellen (5) trägt, und
die Querplatte (13) mit Befestigungsmitteln (15) angebracht ist, die mit den Befestigungsmitteln jeder Strahlungsquelle (5) in ihrem jeweiligen Stützelement (17, 18) identisch sind, so dass die Querplatte an Ort und Stelle einer Strahlungsquelle in der Stütze derselben angeordnet werden kann.

2. Erhitzungsvorrichtung nach Anspruch 1, **dadurch gekennzeichnet, dass** der Neigungswinkel der Unterseite (14) der Platte (13) zwischen 10° und 30° beträgt.

3. Erhitzungsvorrichtung nach Anspruch 1 oder 2, **dadurch gekennzeichnet, dass** der Rohling mit dem Hals (11) unten und dem Boden (12) oben angeordnet ist, so dass die Verluste auf Grund der Konvektion begrenzt sind.

4. Erhitzungsvorrichtung nach einem der Ansprüche 1 bis 3, **dadurch gekennzeichnet, dass** die Querplatte (13) abnehmbar montiert ist.

5. Vorrichtung nach einem der Ansprüche 1 bis 4, **dadurch gekennzeichnet, dass** die Strahlungsquellen (5) allgemeine röhrenförmige Form haben, und dass die Querplatte (13) längliche Form hat und dieselbe Länge wie eine Strahlungsquelle (5) aufweist.

6. Vorrichtung nach einem der Ansprüche 1 bis 5, **dadurch gekennzeichnet, dass** die Befestigungsmittel (15) der Querplatte (13) überragende Längsfinger (22) derselben Ausbildung wie die Kontaktbüchsen (16) der Strahlungsquellen (5) sind, die geeignet sind, in die Stützelemente (17, 18) der Kontaktbüchsen der Strahlungsquellen einzugreifen.

7. Vorrichtung nach einem der Ansprüche 1 bis 6, **dadurch gekennzeichnet, dass** die Querplatte (13) eine Breite besitzt, die ungefähr drei Viertel des Raums der beiden Seitenwände (3, 6) entspricht.

8. Vorrichtung nach einem der Ansprüche 1 bis 7, wobei diese Erhitzungsvorrichtung länglich ist und Fördermittel umfasst, um den Rohling zwischen den beiden Wänden und parallel zu diesen zu verschieben, **dadurch gekennzeichnet, dass** die Querplatten (13) an gewissen ausgewählten Stellen zwischen den beiden Wänden angeordnet sind, so dass der zwischen den Wänden verschobene Rohling (1) einem vorbestimmten Heizprofil unterworfen wird.

9. Vorrichtung nach einem der Ansprüche 1 bis 8, **dadurch gekennzeichnet, dass** die Seite (14) der Querplatte (13) gegenüber dem Boden (12) des Rohlings (1) mit einer Schicht aus einem reflektierenden Keramikmaterial für die Wellenlänge der Strahlung überzogen ist.

10. Vorrichtung nach einem der Ansprüche 1 bis 9, **dadurch gekennzeichnet, dass** die Querplatte (13) aus Aluminium besteht.
